# FASCICULE DE BREVET EUROPEEN

(11) **EP 0 769 462 B1**
(45) Date de publication et mention de la délivrance du brevet: **24.11.1999**
(21) Numéro de dépôt: 96402138.0
(22) Date de dépôt: 09.10.1996
(51) Int. Cl.: B65G 69/04, B01J 8/00

(54) **Procédé et dispositif pour la distribution uniforme d'un solide sous forme divisée dans une enceinte**
Verfahren und Vorrichtung zum gleichmässigen Verteilen von Feststoffen in fein verteilter Form, in einem Behälter
Method and device to distribute uniformly a solid in a finely divided form in a vessel

(30) Priorité: 20.10.1995 FR 9512334
(43) Date de publication de la demande: 23.04.1997
(73) Titulaire: TOTAL RAFFINAGE DISTRIBUTION S.A., 92800 Puteaux (FR)
(72) Inventeur: Haquet, Yvon, 76430 Saint Romain de Colbosc (FR); Patureaux, Thierry, 76290 Fontaine la Mallet (FR)
(74) Mandataire: Jolly, Jean-Pierre

(56) Documents cités:
- EP-A- 0 116 246

## Description

La présente invention concerne un procédé et un dispositif pour la distribution uniforme d'un solide sous forme divisée dans une enceinte. Elle concerne plus particulièrement le remplissage de silos avec des grains, ou de réacteurs chimiques avec un catalyseur sous forme divisée.

Par solide sous forme divisée, on entend un solide se présentant sous la forme de billes, de grains, de cylindres, de pastilles, de bâtonnets ou, plus généralement, de particules de formes quelconques, mais de dimensions relativement faibles. Les catalyseurs utilisés dans les réactions de transformation de produits chimiques ou hydrocarbonés, par exemple le reformage, le craquage, la désulfuration des hydrocarbures ou de coupes pétrolières, les procédés d'hydrotraitement en général, se présentent sous la forme de billes, d'extrudés ou d'éléments multilobes de faibles dimensions.

Tant dans le remplissage de silos de stockage que de réacteurs catalytiques, il est important d'occuper au mieux le volume destiné à contenir le solide divisé. En particulier, dans le cas des catalyseurs, il est avantageux, non seulement de loger dans le minimum d'espace le maximum de catalyseur de façon aussi homogène et uniforme que possible (chargement "dense"), mais également de réaliser ce chargement aussi rapidement que possible.

Aussi, diverses techniques ont-elles été envisagées pour accroître la densité de chargement dans les silos ou dans les réacteurs. On a ainsi proposé :
- une répartition homogène des grains dans une enceinte, grâce à un effet de pluie sur toute la section transversale de cette enceinte (voir US-A-2 655 273) ;
- des équipements fixes, dans lesquels les particules sont dispersées à l'aide d'air comprimé (voir, par exemple, FR-A-2 288-560) ;
- des dispositifs rotatifs, qui dispersent directement les particules (voir notamment FR-A-2 087 890, FR-A-2 153 380 ou encore FR-A-2 319 427).

La Demanderesse a elle-même proposé des procédés de chargement dense utilisant un équipage mobile, qui comprend un arbre entraîné en rotation par un moyen moteur et plusieurs étages d'éléments déflecteurs souples tels que des lanières (voir EP-A-007 854 et EP-A-116 246).

De tels dispositifs, et plus généralement les dispositifs rotatifs, ne permettent pas un chargement continu du réacteur avec un profil uniforme de remplissage. En effet, comme on le verra plus en détail ci-après, il est nécessaire de modifier la vitesse de rotation de l'équipage mobile lorsque l'enceinte se remplit. Ces modifications posent cependant de gros problèmes techniques aux opérateurs, car il est très difficile de prévoir l'effet de ces changements de vitesse sur la qualité du chargement. Une très petite modification de la vitesse de rotation peut perturber l'effet de pluie, c'est à dire la quantité de particules déviées par l'équipage mobile.

En conséquence, il est absolument nécessaire, après chaque modification de la vitesse de rotation de l'équipage mobile, d'arrêter le chargement dans les minutes qui suivent et d'envoyer des opérateurs dans l'enceinte à charger, pour vérifier "de visu" la qualité du chargement après ces modifications, jusqu'à ce que celles-ci conduisent à une qualité de chargement optimale. Ces arrêts et contrôles fréquents posent non seulement de nombreux problèmes techniques (présence de produits chimiques, atmosphère rendue inerte du réacteur, etc...), mais également économiques, puisqu'ils immobilisent le réacteur, dont ils diffèrent d'autant le cycle de production.

La présente invention a pour objet de limiter ces inconvénients importants. La Demanderesse a, en effet, établi que les positions relatives des lanières ou, plus généralement, des éléments déflecteurs articulés à différents niveaux de l'arbre moteur et entraînés en rotation par celui-ci, présentent une importance essentielle.

Plus précisément, elle a établi qu'une répartition homogène et optimale des grains peut être obtenue quel que soit le régime de rotation de l'équipage mobile. Cet équipage est disposé non plus, comme dans la technique antérieure, de manière à répartir les lanières des différents niveaux de l'équipage de façon homogène pour couvrir un maximum de la surface présentée aux grains et obtenir par conséquent un taux de vide minimum de l'équipage tournant, mais au contraire avec les éléments déflecteurs de chaque niveau disposés à l'aplomb les uns des autres, et non décalés les uns par rapport aux autres comme dans la technique antérieure, de manière à conférer à l'ensemble de l'équipage mobile un taux de vide plus important que celui obtenu avec la disposition des éléments déflecteurs adoptée dans la technique antérieure.

Pour les besoins de la présente description, par taux de vide de l'équipage mobile, on entend le rapport (en %) de la surface non couverte par les déflecteurs à la surface totale projetée de l'équipage mobile, une fois les éléments déflecteurs déployés dans l'enceinte.

Cette nouvelle organisation des déflecteurs de l'équipage mobile, qui confère à celui-ci un taux de vide compris entre 30 % et 80 %, suivant les dimensions des lanières généralement utilisées, a pour effet que, de façon tout à fait surprenante, le remplissage d'un réacteur, avec le procédé conforme à la présente invention, permet d'obtenir un chargement dense analogue à l'art antérieur de la Demanderesse, avec, en plus, une meilleure qualité de ce chargement et une orientation préférentielle horizontale des grains de catalyseur, améliorant ainsi les contacts entre le catalyseur, les liquides ou les gaz.

De plus, la disposition des déflecteurs retenue selon l'invention permet, tout en favorisant le contrôle de la perméabilité de l'équipage mobile, une meilleure maîtrise des paramètres de la machine, apportant ainsi une diminution du nombre d'interventions pour vérifications et réglages et réduisant d'autant la durée du chargement.

Par perméabilité aux grains, on entend la quantité (en %) de grains de catalyseur passant à travers l'équipage mobile en rotation, sans être déviés par un impact sur une lanière.

La présente invention a donc pour objet un procédé de distribution uniforme d'un solide sous forme divisée dans une enceinte, dans laquelle le solide tombe sur un équipage mobile comprenant un axe entraîné en rotation par un moyen moteur et des éléments déflecteurs solidaires en rotation de cet axe et disposés suivant plusieurs niveaux décalés verticalement autour de celui-ci, caractérisé en ce que chaque niveau est pourvu d'un même nombre d'éléments déflecteurs de formes sensiblement identiques, en ce que ces éléments déflecteurs sont disposés de façon symétrique par rapport à l'axe de rotation, en ce que les éléments déflecteurs de chaque niveau sont disposés verticalement à l'aplomb les uns des autres et en ce que l'ensemble de l'équipage mobile présente un taux de vide, exprimé en %, généralement compris entre 30 et 80.

De préférence, la vitesse d'entraînement des éléments déflecteurs est aussi lente que possible, généralement comprise entre environ 25 et environ 140 tours par minute et, de préférence, entre 40 et 140 tours par minute. Cet avantage est particulièrement intéressant dans le cas du chargement des grands réacteurs (diamètre supérieur à environ 5 mètres), car il évite tous risques de cassage ou d'attrition des grains, qui pourraient résulter d'une vitesse trop importante lors du choc à l'extrémité des déflecteurs.

Cette application du procédé et du dispositif conformes à l'invention au chargement d'enceintes de diamètre supérieur à 5 mètres constitue un autre objet de la présente invention.

Les divers niveaux de déflecteurs qui sont au nombre de deux ou plus et, de préférence, de trois ou quatre, sont espacés les uns des autres d'une distance comprise entre 2 et 15 centimètres et, de préférence, entre 4 et 8 centimètres.

Les déflecteurs de l'équipage mobile selon la présente invention peuvent présenter des formes diverses et variées, mais seront avantageusement des lanières souples telles que décrites dans le brevet EP-A-116 246. Chaque étage de lanières comprendra au moins deux lanières et de préférence de quatre à douze, ces lanières étant disposées autour de l'axe de rotation et ayant de préférence des formes et des dimensions identiques.

Lorsque les éléments déflecteurs sont des lanières, leur dimension longitudinale peut être comprise entre 10 centimètres et 2 mètres et, de préférence, entre 10 centimètres et 1 mètre.

La présente invention permet donc d'obtenir des avantages importants tant dans la qualité du chargement que pour les opérateurs, en particulier dans le cas du chargement de réacteurs chimiques. Dans ce dernier cas, en plus de l'orientation préférentielle horizontale des grains de catalyseur, les pentes des lits catalytiques calculées par rapport à l'horizontale, dans les réacteurs chargés conformément à la présente invention, sont inférieures à 5 degrés. De tels résultats n'ont jamais été obtenus avec les conditions opératoires décrites dans la technique antérieure. De plus, le nombre d'interventions est diminué, tout en permettant la réalisation de réglages précis de la vitesse de rotation en fonction de la hauteur de chute du catalyseur dans l'enceinte à charger.

La présente invention a également pour objet un dispositif de distribution uniforme d'un solide sous forme divisée dans une enceinte, comportant à la partie supérieure de celle-ci un moyen d'alimentation en solide à distribuer qui déverse ce solide de façon sensiblement verticale dans l'enceinte, et un équipage mobile disposé dans l'enceinte au-dessous du moyen d'alimentation, cet équipage mobile comprenant un axe entraîné en rotation par un moyen moteur et des éléments déflecteurs solidaires en rotation de cet axe et disposés suivant plusieurs niveaux décalés verticalement autour de celui-ci, ce dispositif étant caractérisé en ce que chaque niveau est pourvu d'un même nombre d'éléments déflecteurs de formes sensiblement identiques, en ce que ces éléments déflecteurs sont disposés verticalement à l'aplomb les uns des autres, et en ce que les moyens de solidarisation des éléments déflecteurs et de l'axe sont tels qu'à chaque niveau, ces éléments aient la même vitesse de rotation et restent à la verticale les uns des autres pendant tout le processus de chargement de l'enceinte.

Comme décrit dans les brevets antérieurs de la Demanderesse, le moyen d'entraînement en rotation des éléments déflecteurs comprendra donc un arbre moteur disposé verticalement, sur lequel les éléments déflecteurs souples seront articulés de manière à pouvoir se soulever et s'écarter angulairement de l'axe de l'arbre sous l'effet de la force centrifuge.

Les déflecteurs de l'équipage mobile peuvent avoir toutes formes connues dans la technique antérieure: disques continus, secteurs circulaires, portions d'hélice, lanières de préférence rectangulaires, triangulaires ou trapézoïdales etc.... En coupe transversale, les éléments déflecteurs peuvent également avoir toutes formes connues dans la technique: aplatie, rectangulaire, cylindrique, hélicoïdale, de préférence rectangulaire.

Les dessins annexés illustrent une forme de réalisation du dispositif conforme à l'invention et des résultats d'exemples comparatifs de mise en oeuvre du procédé, qui seront décrits ci-après.

Sur ces dessins:
La figure 1 est une vue schématique d'une enceinte équipée d'un dispositif de chargement de la technique antérieure ;
La figure 2 est un diagramme montrant les vitesses de rotation de l'équipage mobile du dispositif de la figure 1 en fonction du niveau de remplissage de l'enceinte ;
La figure 3 est une vue schématique d'un dispositif conforme à l'invention;
Les figures 4, 5 et 6, sont des diagrammes illustrant des résultats obtenus, qui seront décrits ci-après.

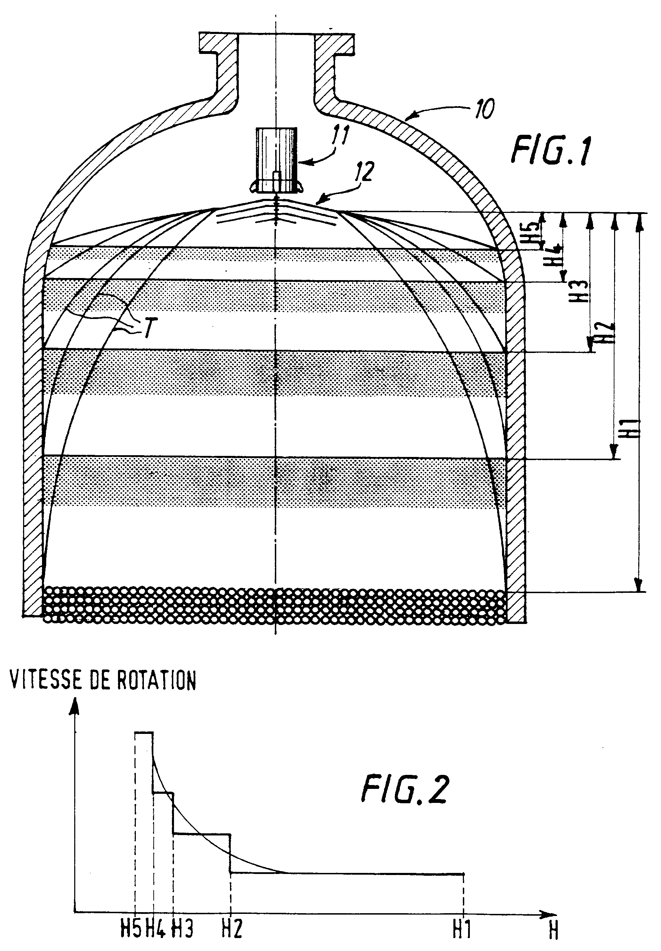

La figure 1 représente une enceinte 10 équipée d'un dispositif de chargement 11, comportant un équipage mobile 12, du type décrit dans EP-A-007 854 ou EP-A-116 246. Comme on le voit sur le dessin, la longueur des trajets T des particules chargées dans l'enceinte, des particules de catalyseur par exemple, varie à mesure que le niveau de ces particules s'élève dans l'enceinte, et il est nécessaire d'interrompre à diverses reprises le chargement pour adapter la vitesse de rotation de l'équipage mobile, la vitesse de rotation s'accroissant lorsque l'on passe d'un premier niveau H₁ aux niveaux successifs H₂,..., H₅ à mesure que l'enceinte se remplit.

Comme expliqué ci-dessus, les interruptions de chargement et les modifications de vitesse de rotation apportées à l'équipage mobile soulèvent de nombreux inconvénients, auxquels la présente invention se propose de remédier.

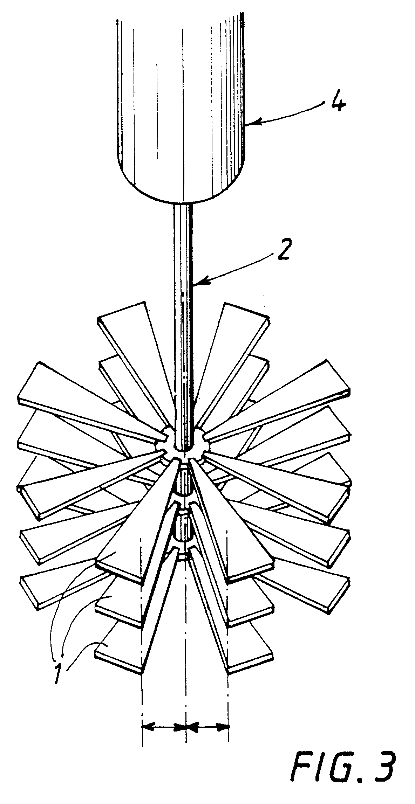

Sur la figure 3, on voit l'équipage mobile du dispositif conforme à l'invention, destiné à être disposé à la partie supérieure d'une enceinte à remplir de façon homogène d'un solide sous forme divisée. Dans le cas présent, cet équipage mobile comprend trois ensembles de huit lanières semi-rigides 1, disposées à trois niveaux espacés verticalement. Les lanières 1 ont ici une forme trapézoïdale et sont articulées sur un même arbre moteur 2 autour d'axes horizontaux, sur lesquels elles sont par exemple montées pivotantes, de manière à pouvoir se soulever sous l'effet de la force centrifuge, lorsqu'elles sont entraînées en rotation par le moyen moteur. Pour le mode de fixation des lanières 1 sur l'arbre 2, on pourra se référer par exemple au brevet européen précité n° 007 854.

Un tuyau, non représenté, alimente une trémie de stockage 4 disposée au-dessus des lanières 1, de manière à déverser sur ces lanières les particules à distribuer.

Conformément à l'invention, les lanières 1 des différents étages de l'équipage mobile sont disposées à l'aplomb les unes des autres à la verticale, et comme elles sont entraînées par le même arbre moteur 2, elles demeurent dans cette même position relative tout au long de la distribution des particules.

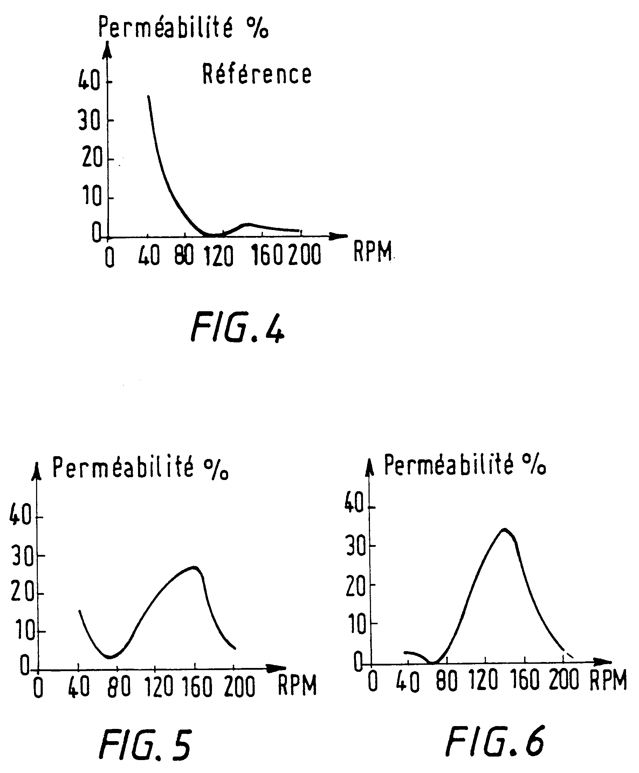

Les diagrammes des figures 4, 5 et 6 correspondent à trois essais de mesure de la perméabilité d'un équipage mobile, réalisés respectivement avec des dispositions différentes des trois ensembles de huit lanières constituant l'équipage mobile. Excepté la vitesse de rotation de l'équipage tournant, les autres conditions opératoires restent identiques pendant les trois essais.

Sur ces diagrammes, on observe l'évolution, en fonction de la vitesse de rotation de l'équipage mobile, de la perméabilité c'est à dire la quantité (en %) de grains de catalyseur passant à travers cet équipage mobile sans être déviés par un élément déflecteur de cet équipage.

Sur le diagramme de la figure 4, on voit que, pour un équipage mobile conforme à la présente invention, c'est à dire avec les lanières de chacun des niveaux de cet équipage disposées à l'aplomb les unes des autres (taux de vide de l'équipage mobile égal à environ 50%), la perméabilité décroît rapidement et régulièrement quand la vitesse de l'équipage augmente, pour devenir presque nulle à partir de 100 tours par minute. Ceci a pour conséquence une distribution homogène du catalyseur suivant tout le volume de l'enceinte et une meilleure maîtrise des paramètres de réglage.

Sur les diagrammes des figures 5 et 6, pour deux installations des lanières différentes, non disposées à l'aplomb les unes des autres, mais au contraire décalées angulairement d'un étage par rapport à l'autre, pour opposer au passage des grains de catalyseur un maximum de surface (taux de vide de l'équipage mobile inférieur à 10%), on voit que les perméabilités évoluent de façon erratique en fonction de la vitesse de rotation de l'équipage. Ceci se traduit par des difficultés de réglage de la vitesse de rotation de l'équipage et donc de la perméabilité aux grains.

L'Exemple comparatif décrit ci-après illustre également les avantages de l'invention.

### Exemple

On remplit deux réacteurs chimiques, R1 et R2, sensiblement identiques possédant un diamètre d'environ 5 mètres et une hauteur d'environ 6,5 mètres, avec des grains de catalyseur se présentant sous forme d'extrudés ayant un diamètre moyen de 1,5 millimètres et une longueur moyenne de 4 millimètres. Le débit du catalyseur est identique pour les deux chargements et égal à environ 15 tonnes par heure.

Les deux réacteurs sont respectivement chargés avec le même équipage mobile. Les lanières de l'équipage sont toutes identiques et réparties suivant trois niveaux et disposées symétriquement par rapport à l'axe de rotation, à chacun de ces niveaux. Ces lanières, au nombre de huit par niveau, sont de forme trapézoïdale. Elles sont réalisées en caoutchouc renforcé, et mesurent 70 centimètres de longueur, 5 et 10 centimètres pour les petite et grande largeurs, et 0,6 centimètre d'épaisseur.

Chacun des deux chargements est réalisé avec un taux de vide de l'équipage mobile différent, comme indiqué dans le Tableau 1 ci-après. Ceci est obtenu avec des dispositions différentes des lanières à chacun des trois niveaux de l'équipage. Le taux de vide de 52 % (réglage de l'équipage mobile pour le chargement du réacteur R2) est la valeur maximum obtenue pour ce type de lanières et correspond donc à une disposition de celles-ci conforme à la présente invention. Le taux de vide de 4 % (réglage de l'équipage mobile pour le chargement du réacteur R1) correspond à une disposition des lanières du type de l'art antérieur de la Demanderesse (voir à ce sujet le brevet FR-A-2538795).

Les résultats obtenus sont rassemblés dans le Tableau 1 ci-après :

**Tableau 1**

| | R1 | R2 |
|---|---|---|
| EQUIPAGE MOBILE | | |
| Niveau 1, % de vide | 52 | 52 |
| Niveau 2, % de vide | 52 | 52 |
| Niveau 3, % de vide | 52 | 52 |
| - % vide de l'équipage mobile | 4 | 52 |
| VITESSE DE ROTATION (en tours par minute) | | |
| - à 1 mètre de hauteur | 180 | 130 |
| - à 4 mètres de hauteur | 130 | 80 |
| - à 6 mètres de hauteur | 95 | 60 |
| CHARGEMENT | | |
| - durée (heure) | 9 | 7 |
| - nombre d'interventions (pour contrôle qualité et réglages) | 6 | 3 |
| QUALITE DU CHARGEMENT | | |
| - gain de densité par rapport à un chargement classique par manche (%) | 18,5 | 18,5 |
| - pente maximum obtenue (°) | 6 | 3,2 |

On voit que le chargement réalisé suivant la présente invention (réacteur R2) est particulièrement avantageux et, tout en obtenant une densité de chargement identique à celle résultant de la technique antérieure de la Demanderesse (réacteur R1), on obtient en plus, par rapport à cette technique antérieure :
- des vitesses de rotation de l'équipage mobile réduites d'environ 30 % ;
- un temps de chargement diminué d'environ 20 % ;
- un nombre d'interventions dans le réacteur, pour contrôles et réglages éventuels, réduit de moitié ;
- une pente plus faible du lit catalytique, donc une qualité de chargement optimisée avec des grains de catalyseur orientés préférentiellement suivant l'horizontale.

## Revendications

1. Procédé de distribution uniforme d'un solide sous forme divisée dans une enceinte, dans laquelle le solide tombe sur un équipage mobile comprenant un axe (2) entraîné en rotation par un moyen moteur et des éléments déflecteurs (1) solidaires en rotation de cet axe et disposés suivant plusieurs niveaux décalés verticalement autour de celui-ci, caractérisé en ce que chaque niveau est pourvu d'un même nombre d'éléments déflecteurs (1) de formes sensiblement identiques, en ce que ces éléments déflecteurs (1) sont disposés de façon symétrique par rapport à l'axe de rotation, en ce que les éléments déflecteurs de chaque niveaux sont disposés verticalement à l'aplomb les uns des autres, et en ce que l'ensemble de l'équipage mobile présente un taux de vide exprimé en % entre 30 et 80.

2. Procédé selon la revendication 1, caractérisé en ce que la vitesse de rotation des éléments déflecteurs (1) est comprise entre 25 et 140 tours par minute et, de préférence, entre 40 et 140 tours par minute.

3. Dispositif de distribution uniforme d'un solide sous forme divisée dans une enceinte, comportant à la partie supérieure de l'enceinte un moyen d'alimentation (3) de celle-ci en solide à distribuer, qui déverse le solide de façon sensiblement verticale dans l'enceinte, et un équipage mobile disposé dans l'enceinte au-dessous du moyen d'alimentation, cet équipage mobile comprenant un axe (2) entraîné en rotation par un moyen moteur et des éléments déflecteurs (2) solidaires en rotation de cet axe et disposés suivant plusieurs niveaux décalés verticalement autour de celui-ci, ce dispositif étant caractérisé en ce qu'à chaque niveau est prévu un même nombre d'éléments déflecteurs (1) de formes sensiblement identiques, en ce que les éléments déflecteurs (1) des différents niveaux sont disposés verticalement à l'aplomb des uns des autres et en ce que les moyens de solidarisation des éléments déflecteurs (1)et de l'axe (2) sont tels qu'à chaque niveau, ces éléments aient la même vitesse de rotation et restent à la verticale les uns des autres pendant tout le processus de chargement de l'enceinte, l'équipage mobile présentent un taux de vide exprimé en % entre 30 et 80.

4. Dispositif selon la revendication 3, caractérisé en ce que, de façon connue en soi, les éléments déflecteurs (1) sont articulés sur l'axe (2) de façon à pouvoir se soulever sous l'effet de la force centrifuge.

5. Dispositif suivant l'une des revendications 3 et 4, caractérisé en ce que les éléments déflecteurs (1) sont disposés suivant au moins deux niveaux décalés verticalement et, de préférence, trois ou quatre.

6. Dispositif suivant l'une des revendications 3 à 5, caractérisé en ce que les niveaux des éléments déflecteurs (1) sont espacés les uns des autres d'une distance comprise entre 2 et 15 centimètres et, de préférence, entre 4 et 8 centimètres.

7. Dispositif suivant l'une des revendications 3 à 6, caractérisé en ce que les éléments déflecteurs (1) de l'équipage mobile sont des lanières souples.

8. Dispositif suivant la revendication 7, caractérisé en ce que le nombre de lanières souples (1) disposées à chaque niveau) est compris entre 2 et 12 et, de préférence, entre 4 et 12, ces lanières étant disposées symétriquement par rapport à l'axe de rotation (2).

9. Dispositif suivant l'une des revendications 7 et 8, caractérisé en ce que la dimension longitudinale des lanières est comprise entre 10 centimètres et 2 mètres et, de préférence, entre 10 centimètres et 1 mètre.

10. Utilisation d'un procédé selon l'une des revendications 1 et 2 ou d'un dispositif selon les revendications 3 à 9, pour le chargement d'enceintes possédant un diamètre supérieur à 5 mètres.

## Claims

1. A process for uniformly distributing a solid in divided form in a vessel, in which the solid drops on to a movable apparatus comprising a shaft (2) caused to rotate by drive means and deflector elements (1) fixed to rotate with this shaft and arranged on several levels displaced vertically about the latter, characterised in that each level is provided with the same number of deflector elements (1) of substantially identical shape, in that these deflector elements (1) are disposed symmetrically in relation to the axis of rotation, in that the deflector elements of each level are disposed vertically directly above one another, and in that the assembly of the movable apparatus has a proportion of free space expressed in % of between 30 and 80.

2. A process according to claim 1, characterised in that the speed of rotation of the deflector elements (1) is between 25 and 140 rpm and, preferably, between 40 and 140 rpm.

3. A device for uniformly distributing a solid in divided form in a vessel, comprising in the upper part of the vessel a means (3) [sic] for supplying the latter with solid to be distributed, which pours the solid in a substantially vertically manner into the vessel, and a movable apparatus arranged inside the vessel below the supply means, said movable apparatus comprising a shaft (2) caused to rotate by drive means and deflector elements (1) [sic] fixed to rotate with this shaft and arranged on several levels displaced vertically about the latter, said device being characterised in that each level is provided with the same number of deflector elements (1) of substantially identical shape, in that the deflector elements (1) of the different levels are disposed vertically directly above one another, and in that the means for securing the deflector elements (1) to the shaft (2) are such that at each level these elements have the same speed of rotation and remain vertically above one another throughout the entire charging process of the vessel, the movable apparatus having a proportion of free space expressed in % of between 30 and 80.

4. A device according to claim 3, characterised in that, in a manner known per se, the deflector elements (1) are articulated to the shaft (2) in such a way that they can lift under the effect of centrifugal force.

5. A device according to either one of claims 3 or 4, characterised in that the deflector elements (1) are disposed on at least two vertically displaced levels and, preferably, three or four.

6. A device according to any one of claims 3 to 5, characterised in that the levels of the deflector elements (1) are spaced apart by a distance of between 2 and 15 centimetres and, preferably, between 4 and 8 centimetres.

7. A device according to any one of claims 3 to 6, characterised in that the deflector elements (1) of the movable apparatus are flexible strips.

8. A device according to claim 7, characterised in that the number of flexible strips (1) disposed on each level is between 2 and 12 and, preferably, between 4 and 12, said strips being disposed symmetrically in relation to the axis of rotation (2)

9. A device according to any either one of claims 7 or 8, characterised in that the longitudinal dimension of the strips is between 10 centimetres and 2 metres and, preferably, between 10 centimetres and 1 metre.

10. Use of a process according to either one of claims 1 or 2 or of a device according to claims 3 to 9, for charging vessels having a diameter greater than 5 metres.

## Patentansprüche

1. Verfahren zur gleichförmigen Verteilung eines Feststoffmaterials in zerteilter Form in einem Behälter, bei welchem das Feststoffmaterial auf ein bewegliches Aggregat herabfällt, das eine durch einen Antriebsmotor zur Rotation angetriebene Welle (2) und mit dieser Welle drehstarr verbundene Ablenkelemente (1) aufweist, die auf verschiedenen vertikal versetzten Niveaus bzw. Etagen um die Welle angeordnet sind,
**dadurch gekennzeichnet,** daß
jeweils jedes Niveau bzw. jede Etage mit der gleichen Anzahl Ablenkelemente (1) von im wesentlichen gleicher Form versehen ist, daß diese Ablenkelemente (1) bezüglich der Rotationswelle symmetrisch angeordnet sind, daß die Ablenkelemente der verschiedenen einzelnen Niveaus bzw. Etagen jeweils vertikal übereinander ausgerichtet angeordnet sind, und daß das bewegliche Aggregat als Ganzes einen prozentualen Leer-bzw. Freianteil zwischen 30 und 80 aufweist.

2. Verfahren nach Anspruch 1, dadurch gekennzeichnet, daß die Drehzahl der Ablenkelemente (1) zwischen 25 und 140 U/min und vorzugsweise zwischen 40 und 140 U/min beträgt.

3. Vorrichtung zur gleichförmigen Verteilung eines Feststoffmaterials in zerteilter Form in einem Behälter, welche im oberen Teil des Behälters eine Aufgabevorrichtung (3) zur Zufuhr des zu verteilenden Feststoffmaterials in den Behälter aufweist, welche das Feststoffmaterial im wesentlichen vertikal in den Behälter einschüttet, sowie ein in dem Behälter unterhalb der Aufgabevorrichtung angeordnetes bewegliches Aggregat, welches eine von einem Antriebsmotor zur Rotation angetriebene Welle (2) sowie mit dieser Welle drehfest verbundene Ab-bzw. Umlemkelemente (1), die auf mehreren vertikal versetzten Niveaus bzw. Etagen um diese Welle angeordnet sind, aufweist,
**dadurch gekennzeichnet,** daß
auf jedem Niveau bzw. Etage jeweils eine gleiche Anzahl Ablenkelemente (1) von im wesentlichen gleicher Form vorgesehen ist, daß die Ablenkelemente (1) der verschiedenen Niveaus bzw. Etagen jeweils vertikal übereinander ausgerichtet angeordnet sind, und daß die Verbindungsmittel der Ablenkelemente (1) mit der Welle (2) so ausgebildet sind, daß auf jedem Niveau bzw. jeder Etage diese Elemente jeweils dieselbe Drehzahl besitzen und während des gesamten Beschickungsvorgangs des Behälters vertikal miteinander ausgerichtet bleiben, wobei das bewegliche Aggregat einen prozentualen Leer- bzw. Freianteil zwischen 30 und 80 aufweist.

4. Vorrichtung nach Anspruch 3, dadurch gekennzeichnet, daß die Ablenkelemente (1) in an sich bekannter Weise an der Welle gelenkig befestigt sind, derart, daß sie sich unter der Wirkung der Zentrifugalkraft aufrichten können.

5. Vorrichtung nach einem der Ansprüche 3 und 4, dadurch gekennzeichnet, daß die Ablenkelemente (1) auf wenigstens zwei, vorzugsweise drei oder vier vertikal vesetzten Niveaus bzw. Etagen angeordnet sind.

6. Vorrichtung nach einem der Ansprüche 3 bis 5, dadurch gekennzeichnet, daß die Niveaus bzw. Etagen der Ablenkelemente (1) voneinander einen Abstand zwischen 2 und 14 cm, vorzugsweise zwischen 4 und 8 cm, besitzen.

7. Vorrichtung nach einem der Ansprüche 2 bis 6, dadurch gekennzeichnet, daß die Ablenkelemente (1) nachgiebig-biegsame Peitschen- bzw. Schlagelemente sind.

8. Vorrichtung nach Anspruch 7, dadurch gekennzeichnet, daß die Zahl der auf jedem Niveau bzw. jeder Etage angeordnten biegsamen Schlagelemente (1) zwischen 2 und 12, und vorzugsweise zwischen 4 und 12, beträgt, wobei diese Schlagelemente symmetrisch bezüglich der Rotationswelle (2) angeordnet sind.

9. Vorrichtung nach einem der Ansprüche 7 und 8, dadurch gekennzeichnet, daß die Längsabmessung der Schlagelemente zwischen 10 cm und 2 m, und vorzugsweise zwischen 10 cm und 1 m, beträgt.

10. Anwendung des Verfahrens nach einem der Ansprüche 1 und 2, oder einer Vorrichtung nach einem der Ansprüche 3 bis 9, zur Beschickung von Behältern mit einem Durchmesser von mehr als 5 m.
